# EUROPEAN PATENT APPLICATION

(11) **EP 4 838 355 A1**
(43) Date of publication of application: **11.11.2026**
(21) Application number: 24915206.7
(22) Date of filing: 27.12.2024
(51) Int. Cl.: G06F 9/44, G06F 8/36

(54) **METHOD AND APPARATUS FOR REALIZING EXTENSIBILITY FOR COMPOSITION PROCESS**

(30) Priority: 05.01.2024 CN 202410028800
(71) Applicant: ZTE CORPORATION, Shenzhen, Guangdong 518057 (CN)
(72) Inventor: SHENG, Long, Shenzhen, Guangdong 518057 (CN); YANG, Xin, Shenzhen, Guangdong 518057 (CN); PU, Zhe, Shenzhen, Guangdong 518057 (CN)
(74) Representative: Verdecchia, Valerio
(86) International application number: PCT/CN2024/143403
(87) International publication number: WO 2025/145992

(57) **Abstract**

Provided are a method and apparatus for implementing extensibility of an assembly process. The method includes: selecting a reusable functional unit, and obtaining a first definition file set based on the reusable functional unit; parsing the first definition file set to obtain a first orchestration object; performing an orchestration process on the first orchestration object to obtain a second orchestration object; obtaining a second definition file set based on the second orchestration object; and obtaining a target plugin based on the second definition file set, so that the target plugin provides an extensibility capability for a component.

## Description

### Cross-Reference to Related Application

The present disclosure is based on and claims the benefit of priority of Chinese Patent Application No. CN2024100288008, filed on 05 January 2024 and entitled "Method and Apparatus for Implementing Extensibility of Assembly Process", the disclosure of which is incorporated herein by reference in its entirety.

### Technical Field

Embodiments of the present disclosure relate to the technical field of enterprise application development, and in particular, to a method and apparatus for implementing extensibility of an assembly process.

### Background

Traditional application development faces a number of challenges: (1) insufficient development capacity; (2) tendency to select inappropriate technical directions; (3) slow delivery speed. To solve these problems, a common technical solution is to use a "composable application" technology to save time and improve delivery speed.

In the related art, the basic object targeted by the "composable application" technology is a component, and a package bundle or a version bundle is constructed by selecting components with fixed functions.

However, when a component with fixed functions has a functional deficiency, it is often necessary to modify the code of the component, recompile and package the component to output a new component version, and then use the new component version to construct the package bundle or the version bundle, resulting in a relatively complicated process and low flexibility.

### Summary

Embodiments of the present disclosure provide a method and apparatus for implementing extensibility of an assembly process.

According to one embodiment of the present disclosure, provided is a method for implementing extensibility of an assembly process, including: selecting a reusable functional unit, and obtaining a first definition file set based on the reusable functional unit; parsing the first definition file set to obtain a first orchestration object; performing an orchestration process on the first orchestration object to obtain a second orchestration object; obtaining a second definition file set based on the second orchestration object; and obtaining a target plugin based on the second definition file set, so that the target plugin provides an extensibility capability for a component.

According to another embodiment of the present disclosure, provided is an apparatus for implementing extensibility of an assembly process, including: an assembly module configured to select a reusable functional unit and obtain a first definition file set based on the reusable functional unit; a plugin orchestration module configured to parse the first definition file set to obtain a first orchestration object; and perform an orchestration process on the first orchestration object to obtain a second orchestration object; a plugin generation module configured to obtain a second definition file set based on the second orchestration object; and configured to obtain a target plugin based on the second definition file set, so that the target plugin provides an extensibility capability for a component.

According to yet another embodiment of the present disclosure, further provided is a computer-readable storage medium, having a computer program stored therein, wherein the computer program is configured to, when being executed, perform steps in any one of the above method embodiments.

According to yet another embodiment of the present disclosure, further provided is an electronic device, including a memory and a processor, the memory having a computer program stored therein, the processor being configured to execute the computer program to perform steps in any one of the above method embodiments.

### Brief Description of the Drawings

FIG. 1 is a flowchart of application assembly according to the related art;
FIG. 2 is a flowchart of a method for implementing extensibility of an assembly process according to embodiments of the present disclosure;
FIG. 3 is a flowchart of a method for performing plugin-plugin orchestration-plugin for an API plugin according to embodiments of the present disclosure;
FIG. 4 is a flowchart of a method for obtaining a first orchestration object based on a first definition file according to embodiments of the present disclosure;
FIG. 5 is a flowchart of a method for obtaining a second orchestration object based on a first orchestration object according to embodiments of the present disclosure;
FIG. 6 is a first schematic framework diagram of a method for implementing extensibility of an assembly process according to embodiments of the present disclosure;
FIG. 7 is a schematic framework diagram of an assembly process according to embodiments of the present disclosure;
FIG. 8 is a schematic framework diagram of a plugin orchestration process according to embodiments of the present disclosure;
FIG. 9 is a schematic framework diagram of a parsing and orchestration process for an API-type plugin according to embodiments of the present disclosure;
FIG. 10 is a schematic framework diagram of an orchestration process for a configuration-type plugin according to embodiments of the present disclosure;
FIG. 11 is a schematic framework diagram of an orchestration process for a script-type plugin according to embodiments of the present disclosure;
FIG. 12 is a schematic framework diagram of extensibility capability accumulation according to embodiments of the present disclosure;
FIG. 13 is a schematic framework diagram of information interaction among a client, a script and a server according to embodiments of the present disclosure;
FIG. 14 is a schematic framework diagram of selected APIs and generated APIs in a conversion process between a Web Service protocol and a rest protocol according to embodiments of the present disclosure;
FIG. 15 is a schematic structural diagram of an apparatus for implementing extensibility of an assembly process according to embodiments of the present disclosure.

### Detailed Description of the Embodiments

The embodiments of the present disclosure will be described in detail below with reference to the accompanying drawings and in conjunction with the embodiments.

It should be noted that the terms "first", "second" and the like in the specification and claims of the present disclosure and the above drawings are used to distinguish similar objects, and are not necessarily used to describe a specific order or sequence.

In the related art, traditional application development faces many challenges: (1) insufficient development capacity; (2) tendency to select inappropriate technical directions; (3) slow delivery speed. To solve these problems, a common technical solution is "code reuse", which reuses existing and relatively mature code. In this way, time can be saved and delivery speed can be improved.

The "composable application" proposed by Gartner solves the above problems by introducing a new architecture, which is expected to introduce the concept of modularization so that technical and business teams can reuse code more agilely and efficiently. By developing enterprise-level applications through composable thinking, composable platforms and composable architectures, the deep integration of digital technology and business applications is promoted. In complex and changeable situations, "composable applications" can improve the adaptability and innovation capability of enterprises, and provide standard basis for integrated development of components by formulating relevant specifications for component integration and decoupling, and promote the standardization and certification governance of components.

The core of a "composable application" is called "Packaged Business Capability (PBC)". The PBC is a software-defined minimal business function. The official definition of Gartner for PBC states that the PBC is a well-defined software component that can be functionally recognized by users. The PBC is a bounded collection whose constituent elements are a data schema (a collection of database objects), a set of services, a set of APIs (Application Programming Interfaces) and event channels.

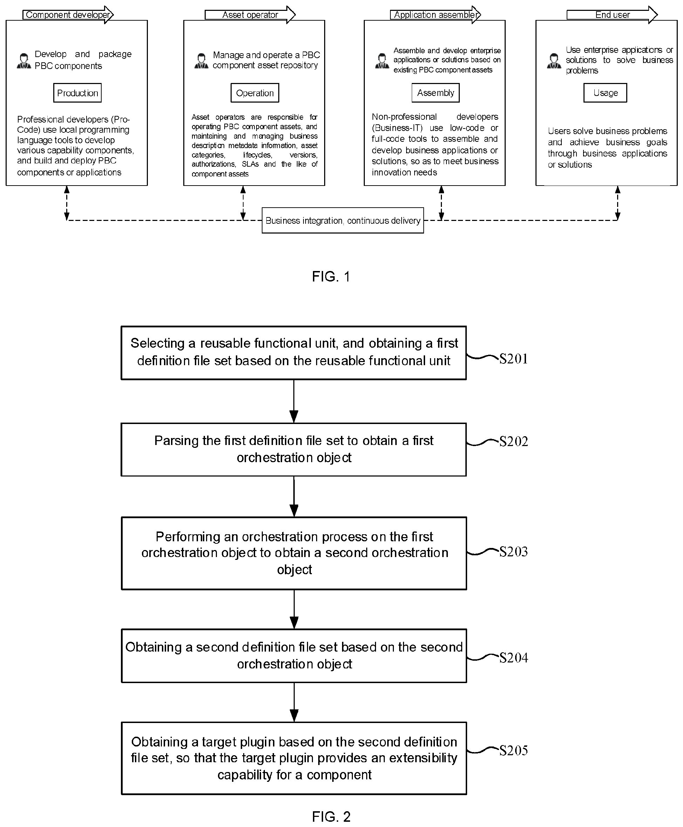

FIG. 1 is a flowchart of application assembly according to the related art. As shown in FIG. 1, PBC is applied to application assembly, and the complete process of application assembly is divided into the following four stages.

In the production stage, professional developers (Pro-Code) use local programming language tools to develop various capability components, and build and deploy PBC components or applications.

In the operation stage, asset operators are responsible for operating PBC component assets, maintaining and managing business description metadata information, asset categories, lifecycles, versions, authorizations, SLAs (Service Level Agreements) and the like of component assets.

In the assembly stage, non-professional developers (Business-IT) use low-code or full-code tools to assemble and develop business applications or solutions to meet business innovation needs.

In the usage stage, users solve business problems and achieve business goals through business applications or solutions.

The assembly technology in the related art is mainly based on components, and a package bundle or a version bundle is constructed by selecting components. When an existing component has a functional deficiency, it is often necessary to modify the code, recompile and package the component to output a new component version, which is a relatively complicated process with low flexibility. For the configuration used by components, there is no flexible mechanism to adjust the configuration without modifying the components, or to provide different business configurations to the components for different business scenarios.

The assembly stage is in the design stage of the entire application assembly process, in which enterprise applications or solutions are assembled and developed based on existing component assets. The "extensibility" mentioned in the present disclosure specifically refers to "extensibility of the assembly process", which means that new component business capabilities can be quickly built based on existing components. Implementing extensibility can greatly improve the adaptability of composable applications to different enterprises and complex business scenarios, and can also provide users with richer functions such as component integration and component operation and maintenance. At present, there is no method for implementing extensibility of an assembly process in the industry, which is also a major difficulty in the implementation of composable applications.

FIG. 2 is a flowchart of a method for implementing extensibility of an assembly process according to embodiments of the present disclosure. As shown in FIG. 2, in the present embodiment, a method for implementing extensibility of an assembly process is provided, and the method includes the following steps.

Step S201, selecting a reusable functional unit, and obtaining a first definition file set based on the reusable functional unit;

In one implementation, the reusable functional unit includes at least one of: a component or a plugin.

In an exemplary implementation, the first definition file set may be obtained based on at least one group of components, or may be obtained based on at least one group of plugins, or may be obtained based on a combination of at least one group of components and at least one group of plugins.
Step S202, parsing the first definition file set to obtain a first orchestration object;
Step S203, performing an orchestration process on the first orchestration object to obtain a second orchestration object;
Step S204, obtaining a second definition file set based on the second orchestration object;
Step S205, obtaining a target plugin based on the second definition file set, so that the target plugin provides an extensibility capability for a component.

The difference between the first orchestration object and the second orchestration object lies in different values of fields.

Through the above steps, when the package bundle or the version bundle needs to be modified, by selecting and combining reusable functional units, plugins generated by the reusable functional units are used to extend capabilities of components, avoiding the operation of modifying component codes and improving the efficiency of modifying the package bundle or the version bundle. In this way, application development can be performed more quickly, and some challenges and problems in traditional development can be solved.

In one implementation, before selecting the reusable functional unit and obtaining the first definition file set based on the reusable functional unit, the method further includes:
taking the target plugin as a plugin of the reusable functional unit.

In an exemplary implementation, after using the target plugin as a plugin of the reusable functional unit, steps S201 to S205 are repeated to facilitate a cycle process of plugin-plugin orchestration-plugin for the target plugin, thereby facilitating the generation of a new plugin using the target plugin, or generating a new plugin based on the component and the target plugin, so as to realize reuse of the extensibility capability of the plugin. Therefore, in the process of generating a new plugin, the plugin of the reusable functional unit may select the target plugin generated by the above steps S201 to S205, or may select a known plugin with a specific function.

In one implementation, after obtaining the target plugin based on the second definition file set so that the target plugin provides the extensibility capability for the component, the method further includes:
obtaining a package bundle or a version bundle based on the target plugin and the component of the reusable functional unit.

In an exemplary implementation, combining the target plugin with the component of the reusable functional unit facilitates supplementing functions that are not covered by the component through the plugin, without modifying the code of the component, thereby facilitating the generation of a package bundle or a version bundle that meets business requirements based on the target plugin and the component.

In an exemplary implementation, a method for combining the target plugin with the component of the reusable functional unit is as follows.

Introducing the plugin: introducing the plugin file into the code of the component, which may be performed by an import statement or by using a script tag in HTML to introduce the script file of the plugin.

Registering the plugin: according to the usage mode of the plugin, it may be necessary to register the plugin in the component. Some plugins may be registered automatically, while others require manual execution of a registration function.

Using the plugin function: by calling an API or method provided by the plugin, the function of the plugin is attached to the component. At an appropriate time, the method provided by the plugin is called to implement the corresponding function.

Forming a new component: after the function of the plugin is successfully attached to the component, the component can be regarded as a new component having the function. The use and configuration of the plugin function can be controlled through props or state of the component.

Packaging as a package bundle or a version bundle: packaging the component, and providing corresponding parameters and configuration options. A tool or script may be used to package and publish the package or version of the component.

In one implementation, the first orchestration object or the second orchestration object includes: an API object, a configuration object and a script object; wherein,
for the first orchestration object: the API object includes API definition information obtained by parsing the first definition file set, and the configuration object and the script object are both null values;
for the second orchestration object: the API object includes API definition information generated by orchestration, the configuration object includes configuration file information set by orchestration, and the script object includes a file address, an execution engine and execution parameters of a script set by orchestration.

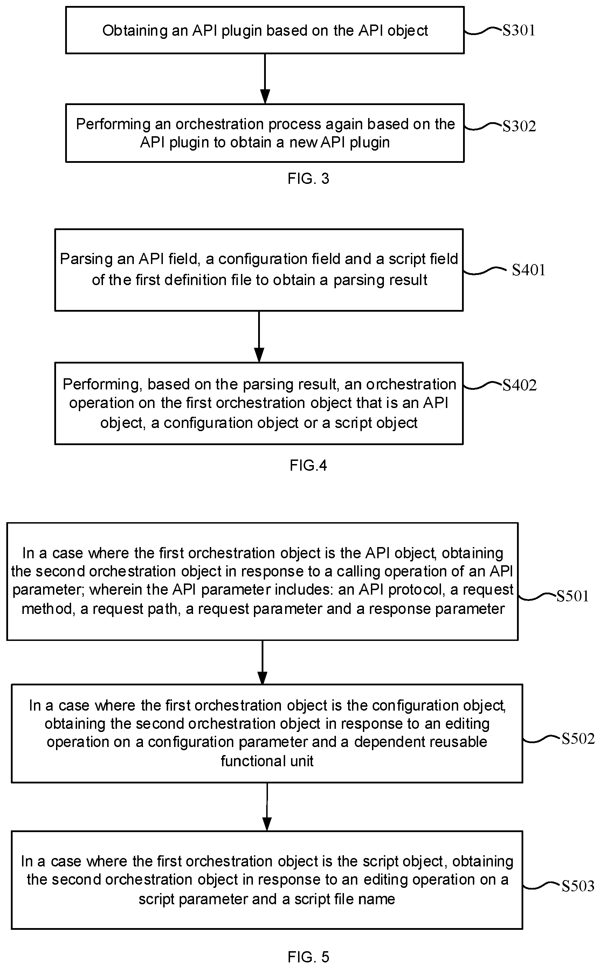

FIG. 3 is a flowchart of a method for performing plugin-plugin orchestration-plugin for an API plugin according to an embodiment of the present disclosure. As shown in FIG. 3, in one implementation, the method further includes:
S301, obtaining an API plugin based on the API object;
S302, performing an orchestration process again based on the API plugin to obtain a new API plugin.

In an exemplary implementation, the input of the API-type plugin orchestration is a definition file of a component, and after the plugin orchestration process and the plugin generation process, the output is an API plugin. The API plugin includes a definition file and can be set again for plugin orchestration, that is, the API plugin orchestration can perform a cyclic process of "plugin - plugin orchestration - plugin".

Configuration-type plugin orchestration and script-type plugin orchestration are not based on the definition file of a component; both add new functions during the orchestration process. Their orchestration processes have no input, and the outputs are respectively a configuration-type plugin and a script-type plugin, so neither of them supports the cyclic process of "plugin - plugin orchestration - plugin".

In one implementation, parsing the first definition file set to obtain the first orchestration object includes:
performing, based on the first definition file set, a dependency analysis on the reusable functional unit to select a dependent component or plugin.

FIG. 4 is a flowchart of a method for obtaining a first orchestration object based on a first definition file according to an embodiment of the present disclosure. As shown in FIG. 4,

In one implementation, parsing the first definition file set to obtain the first orchestration object includes:
S401, parsing an API field, a configuration field and a script field of the first definition file to obtain a parsing result;
S402, performing, based on the parsing result, an orchestration operation on the first orchestration object that is an API object, a configuration object or a script object.

In an exemplary implementation, for the first definition file of a component or a plugin, API interface details (exposed APIs), dependent APIs and dependent components/plugins (dependent APIs) can be identified according to the API field, and this information is a detailed description of the APIs provided by the component/plugin. The parsing results of the parsed configuration field and script field are null values, which need to be manually written.

FIG. 5 is a flowchart of a method for obtaining a second orchestration object based on a first orchestration object according to an embodiment of the present disclosure. As shown in FIG. 5,

In one implementation, performing an orchestration process on the first orchestration object to obtain the second orchestration object includes:
S501, in a case where the first orchestration object is the API object, obtaining the second orchestration object in response to a calling operation of an API parameter; wherein the API parameter includes: an API protocol, a request method, a request path, a request parameter and a response parameter;
S502, in a case where the first orchestration object is the configuration object, obtaining the second orchestration object in response to an editing operation on a configuration parameter and a dependent reusable functional unit; and
S503, in a case where the first orchestration object is the script object, obtaining the second orchestration object in response to an editing operation on a script parameter and a script file name.

In an exemplary implementation, the operation of performing an orchestration process on the first orchestration object to obtain the second orchestration object can be understood as freely combining, according to business requirements, the API fields of different components/plugins of the first orchestration object, and writing the configuration field of the configuration object or the script field of the script object, so as to form new configuration content and script content.

In one implementation, obtaining the target plugin based on the second definition file set includes:
in a case where the first orchestration object is the API object or the configuration object, obtaining the target plugin based on the second definition file set.

In one implementation, obtaining the target plugin based on the second definition file set includes:
in a case where the first orchestration object is the script object, obtaining the target plugin based on the second definition file set and the script parameter.

The above method is explained below with reference to examples.

Generally speaking, the method of the present disclosure uses three processes: an assembly process, a plugin orchestration process and a plugin generation process.

The assembly process is a process of combining components. In the assembly process, a user selects components according to business requirements, and an assembly tool performs a dependency analysis on the components and automatically selects the dependent components.

Both components and plugins are required to provide a definition file of a unified specification. The definition file has a certain fixed format and is a complete information description of a component or a plugin. The content includes basic information, component/plugin dependencies, topology information, resource information, business configuration and API definition. The present disclosure mainly focuses on the API definition part in the definition file.

The API definition completely describes the API information of a component/plugin, including details of externally provided APIs, dependent APIs, and dependent components.

In the plugin orchestration process, an orchestrator imports the definition file and generates an orchestration object. The orchestration object is a visual representation of the component or plugin in the orchestrator. A user uses an interface in the orchestrator to combine orchestration objects to complete orchestration. The plugin orchestration process generates an orchestration object, and the generated orchestration object includes an API object, a configuration object and a script object. The API object includes API definition information generated by orchestration, the configuration object includes configuration file information set by orchestration, and the script object describes a file address, an execution engine and execution parameters of a script set by orchestration.

In the plugin generation process, a definition file is constructed according to the output of the plugin orchestration, and finally the definition file and the output of the plugin orchestration are published to the assembly tool to become a new plugin.

The method described in the present disclosure is a method for implementing extensibility of an application assembly process by using a definition file as a resource, building an extensibility capability through the plugin orchestration process, and finally publishing the extensibility capability as a plugin for use in a subsequent assembly process.

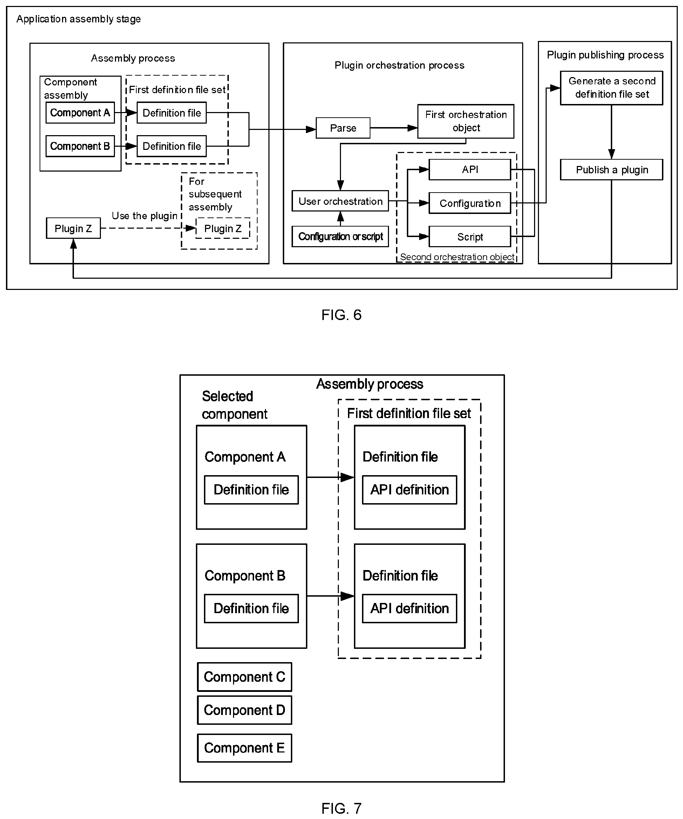

FIG. 6 is a first schematic framework diagram of a method for implementing extensibility of an assembly process according to an embodiment of the present disclosure. As shown in FIG. 6, the complete steps of constructing the extensibility capability of the assembly process described in the present disclosure are shown in the following figure, including the following 5 steps.

Step 1: a user selects components and generates definition files.

FIG. 7 is a schematic framework diagram of an assembly process according to an embodiment of the present disclosure. As shown in FIG. 7:
A user selects components in an assembly tool according to actual requirements, and each component is required to provide a definition file. After the user selects the components, the assembly process outputs a set of these definition files (i.e., the first definition file set).

The definition file is a description specification for components and plugins, has a fixed format, and is a complete information description of a component or a plugin, and is also the basis for the assembly tool to identify components and plugins. The content of the definition file includes basic information, component/plugin dependencies (dependent), topology information (topo), resource information (resource), script information (script), business configuration (config) and API definition (api).

The API definition includes API interface details provided by the component (exposed APIs), dependent APIs and dependent components (dependent APIs), and is a detailed description of the APIs provided by the component. The APIs provided by the component may be of various application layer protocols, such as the rest protocol, the Web Service protocol and the RPC protocol. The method and url fields describe the HTTP layer method and address of an interface, the protocol field describes the application layer protocol type of the interface, and the specification field is the address of a protocol file, which is a complete definition of a group of interfaces. For a rest protocol interface, the specification is the address of a Swagger file; for a Web Service protocol interface, the specification is the address of a WSDL file; and for an RPC protocol interface, the specification is the address of a proto file.

The dependent APIs are components and interfaces depended on by the component, wherein the name and kind fields describe the dependent component or plugin, and the kind type indicates that the object is a component or a plugin. The apiName is the name of the dependent API. The method, url and specification fields under the dependent APIs have similar meanings to the fields with the same names under the exposed APIs, and are used to describe an API.

Steps 2 to 3: parsing the component definitions to generate orchestration objects; and the user orchestrating plugins to generate an orchestration object.

This step is mainly performed by a plugin orchestrator, which is a specific implementation of the plugin orchestration process. Using the definition file output in step 1 as a data source, the plugin orchestrator parses specific fields of the definition file, constructs an orchestration object and presents it in an orchestration interface. A user performs functional orchestration using the plugin orchestrator interface, and the final output is an orchestration object.

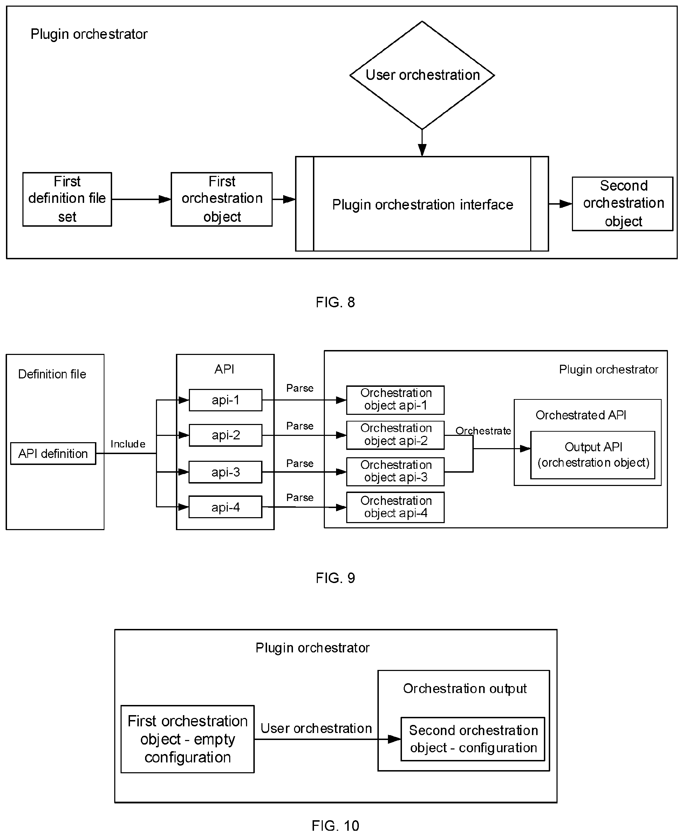

FIG. 8 is a schematic framework diagram of a plugin orchestration process according to an embodiment of the present disclosure. As shown in FIG. 8:
The first orchestration object generated by parsing the definition file and the second orchestration object generated by plugin orchestration both comply with the definition specification of orchestration objects, and the two are equivalent. For example, if the first orchestration object generated by the definition file is "API-type orchestration object A", then the second orchestration object generated by orchestration is "API-type orchestration object B". Both have the same definition format, and only the specific field values are different.

The plugin orchestrator can orchestrate three types of objects: API, configuration and script.

Orchestrating an API is applicable to scenarios of adding an extension function to a component. For example, when a single API in an existing component cannot meet a requirement, but a combination of multiple APIs can meet the requirement, by combining APIs of multiple components in the plugin orchestrator and adding business logic, an API that meets the requirement is finally generated. Another typical application scenario is API forwarding. The plugin orchestration generates a new API as a proxy for the component API. In the process of forwarding a request from the new API to the component API, business functions can be orchestrated, such as adding authentication, monitoring, request filtering and statistics. In both of the above scenarios, plugin orchestration can be used to provide an extensibility capability for an existing component, without making intrusive changes to the component and without affecting the existing functions and APIs of the component.

Orchestrating a configuration is applicable to scenarios of providing multiple business scenario configurations for a component. When a component needs to use different configurations according to different business scenarios, multiple sets of configurations can be provided through plugin orchestration, that is, configuration-type plugins. When assembling version bundles for different business scenarios, a user can select these configuration plugins, thereby achieving the purpose of dynamically assembling configurations in the assembly process.

Script orchestration is applicable to scenarios of providing a component with tool scripts, auxiliary functions or a sidecar capability (a capability of separating an application function from the application itself as a separate process). For example, when a version bundle is deployed, it is necessary to set common environment variables and file permissions for components. These functions are not functions that should be provided by a certain component, are unrelated to business, and are more suitable to be implemented using a separate tool script. Plugin orchestration provides a convenient method for orchestrating scripts in these scenarios, without making intrusive changes to components.

Before a user performs orchestration, the plugin orchestrator imports the definition file, parses the definition file, and generates a first orchestration object. The first orchestration object is displayed on an interface of the orchestrator for use by the user.

A parsing process of an API-type plugin: importing the definition file, parsing an API definition (an API field) therein, the orchestrator obtaining, according to an exposed APIs field, a Swagger file, downloading and parsing the Swagger file to obtain detailed information of the APIs, and constructing an orchestration object for each API, the orchestration object including a definition and dependencies of the API.

Specific parsed fields are: traversing all APIs under the exposed APIs of the definition file, parsing the swagger to obtain the detailed information of the APIs, generating an API field in a component object, and taking the dependent APIs field of the definition file to generate a dependent field in the component object.

The dependent field in the orchestration object describes a dependency relationship, and this field corresponds to the dependent in the definition file. For example, for an API orchestration object, dependent describes dependent APIs and components corresponding to the dependent APIs. When the orchestration is completed, the dependent field in the definition file is generated according to the dependent field of the orchestration object, that is, a dependency relationship of the plugin. When a user selects a plugin in the assembly process, an assembly tool can automatically select, according to the dependent field in the definition file of the plugin, components on which the plugin depends.

FIG. 9 is a schematic framework diagram of a parsing and orchestration process for an API-type plugin according to an embodiment of the present disclosure. As shown in FIG. 9,

An orchestration process of an API-type plugin: a user selects an API on an interface of the orchestrator, fills in request parameters for calling the API, and defines a new API, including an API protocol, a request method, a request path, a request parameter and a response parameter. An output of the API-type plugin orchestration is an API orchestration object.

FIG. 10 is a schematic framework diagram of an orchestration process for a configuration-type plugin according to an embodiment of the present disclosure. As shown in FIG. 10:
An orchestration object of a configuration-type plugin: initial content of the orchestration object corresponding to a configuration is null, without a fixed definition, and specific data is filled in by the user in the orchestrator.

An orchestration process of a configuration-type plugin: a user directly writes a business configuration in the orchestrator, and fills in information of dependent components and plugins, and finally the orchestrator generates a configuration orchestration object.

Supported configuration file formats include JSON, XML, TOML, YAML, CSV and the like.

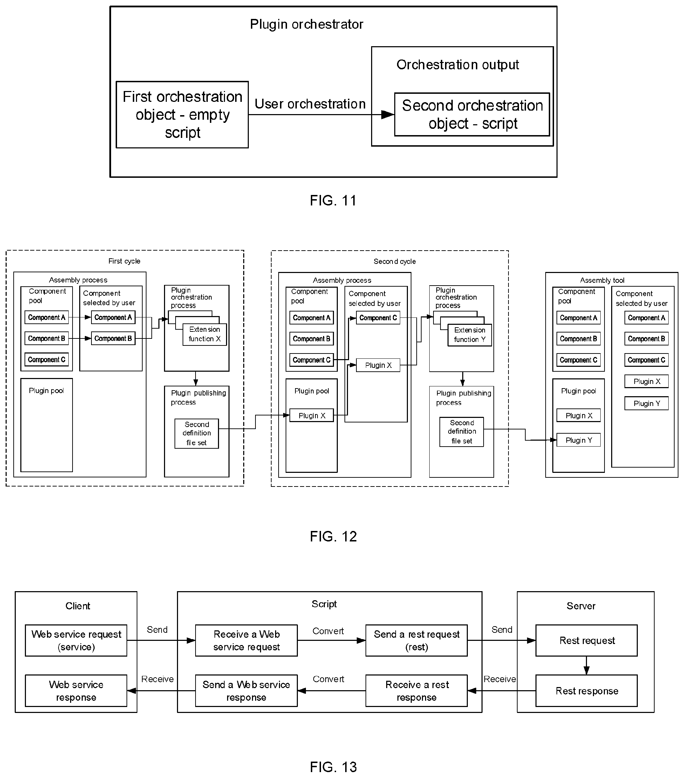

FIG. 11 is a schematic framework diagram of an orchestration process for a script-type plugin according to an embodiment of the present disclosure. As shown in FIG. 11:
An orchestration object of a script-type plugin: initial content of the orchestration object corresponding to a script is null, without a fixed definition, and a specific script is filled in by the user in the orchestrator.

An orchestration process of a script-type plugin: a user directly writes a script in the orchestrator, and fills in a file name, an execution engine and execution parameters of the script. Finally the orchestrator generates a script orchestration object.

There are no strict restrictions on file formats and programming languages supported by the script, as long as the component can provide an execution engine of a corresponding format, for example, a shell script, a python script, a javascript script, a lua script and the like.

Step 4: generating a definition file.

After the orchestration is completed, a definition file is generated according to the orchestration object output by the orchestration.

In a process of generating the definition file from the orchestration object, a basic information part is the same for the three types of orchestration objects (API, configuration and script), and is filled in by the user during orchestration, including a plugin name (name), a description (description) and a version (version); a type field (kind) is automatically generated as a plugin type (plugin); and dependent components and plugins (dependent) are generated from the dependent field of the orchestration object.

For an API orchestration object, an API definition field (api) is used to generate the API definition field (api) of the definition file. Since it is an API orchestration object, configuration-type and script-type orchestration are not involved, so a configuration field (config) and a script field (script) are null values.

For a configuration orchestration object, a configuration field (config) is used to generate the configuration field (config) of the definition file. Since it is a configuration-type orchestration object, API-type and script-type orchestration are not involved, so the API definition field (api) and the script field (script) are null values.

For a script orchestration object, a script field (script) is used to generate the script field (script) of the definition file. Since it is a script-type orchestration object, API-type and configuration-type orchestration are not involved, so the API definition field (api) and the configuration field (config) are null values.

Step 5: publishing a plugin.

The plugin definition file generated in step 4 and the orchestration output file are packaged and published to the assembly tool to become a plugin.

For API-type and configuration-type plugin orchestration, only the definition file is output by orchestration, and there is no additional orchestration output file. For script-type plugin orchestration, in addition to the definition file, the output file further includes a script written by the user.

All the above three types of orchestration generate a definition file, and the definition file, as a common definition specification for components and plugins, includes complete information of a component. The orchestration output can be published as a plugin only based on the definition file.

A plugin provides a definition file, and can be used in the component assembly and orchestration process in the same way as a component. Repeating steps 1 to 5 can form a cyclic process of "component/plugin - assembly - orchestration - plugin publishing". Each cycle orchestrates new APIs, configurations and scripts based on existing components and plugins, providing an extensibility capability for the assembly process. When the functions or configurations of existing components/plugins cannot meet requirements, the extensibility capability can be built through the above process.

FIG. 12 is a schematic framework diagram of extensibility capability accumulation according to an embodiment of the present disclosure. As shown in FIG. 12,

In a first cyclic process, a user selects components A and B, and orchestrates plugin X according to steps 1 to 5. In a second orchestration, component C and plugin X are selected to orchestrate plugin Y. Subsequently, assembly meeting user requirements can still be performed based on components A, B, C and plugins X and Y.

In an exemplary implementation, when assembling a user management system of a certain company, it is found that an old version of a client uses a Web Service interface, a new version of the client uses a rest interface, an old version of a server provides the Web Service interface, and a new version of the server provides the rest interface. The old version of the server needs to be decommissioned, but it cannot be ensured that all clients are updated to the new version in a short time, so a compatibility layer is required, that is, the client sends a request using the Web Service interface to the rest interface of the server, and the compatibility layer is responsible for protocol conversion. This requirement can be met by using the present disclosure in the assembly process. The plugin orchestration process provides a function of forwarding the Web Service interface to the rest interface, so that the old version of the client can continue to be used, and the old version of the server can be decommissioned. The entire assembly process does not require modification of component codes.

FIG. 13 is a schematic framework diagram of information interaction among a client, a script and a server according to an embodiment of the present disclosure. As shown in FIG. 13, the server of the above components is divided into two components, and each service provides one interface: component A provides a GET /user/:id interface for querying basic user information; component B provides a GET /role/:id interface for querying a user role.

Step 1: a user selects components and generates definition files.

Components A and B are selected in the assembly tool, and component definitions are merged by the assembly process.

Component A has a name of user-manager (name), a kind of component type (kind), a version v1 (version), provides a user-info interface (GET /user/:id), and depends on component x (dependent).

Component B has a name of role-manager (name), a kind of component type (kind), a version v1 (version), provides a role-info interface (GET /user/:id), and depends on component y (dependent).

Two Swagger files are respectively obtained from the two definition files: user-info-swagger.json and role-info-swagger.json.

The swagger.json file describes an interface name, a protocol, an input parameter structure and an output parameter structure.

Step 2: parsing the component definitions to generate orchestration objects. After step 1 is completed, the definition files of the two components are imported into the plugin orchestrator, and the plugin orchestrator reads the definition files to generate orchestration objects, each API corresponding to one orchestration object, which is displayed on the interface of the orchestrator.

Step 3: a user performs orchestration to generate an orchestration output.

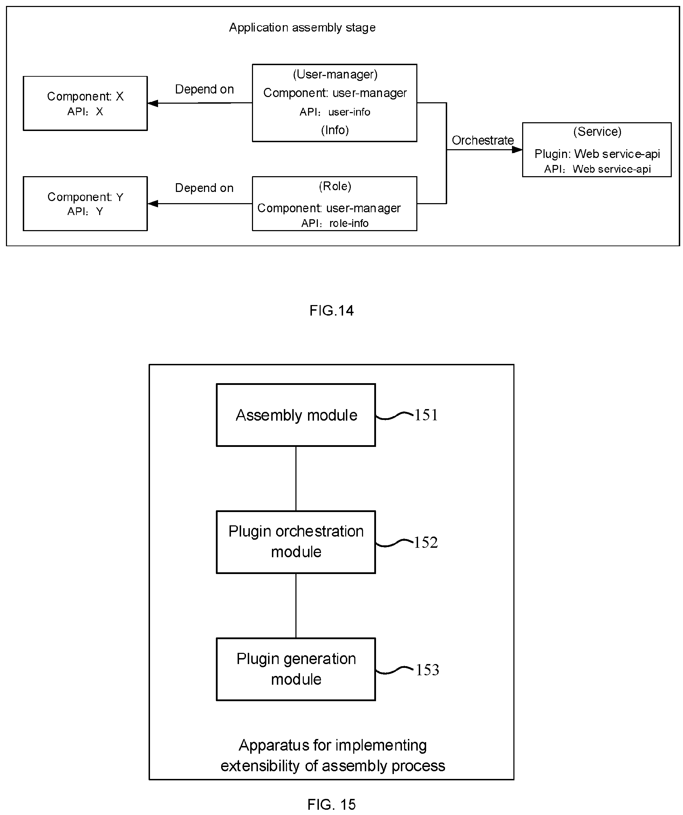

FIG. 14 is a schematic framework diagram of selected APIs and generated APIs in a conversion process between a Web Service protocol and a rest protocol according to an embodiment of the present disclosure. As shown in FIG. 14,

A user selects the above two interfaces in the orchestrator for calling, provides a Web Service protocol interface and a conversion function between the Web Service protocol and the rest protocol, and provides a new Web Service interface definition.

After the orchestration is completed, the orchestrator generates an orchestration object.

The orchestrated API provides the Web Service protocol, and when a Web Service request is received, it converts the request into a rest request, calls a corresponding interface and returns.

Step 4: generating a definition file.

The plugin publishing process constructs a definition file according to the orchestration object output in step 3.

Basic information of the definition file is filled in by the user during orchestration, including a plugin name, a description and a version, the configuration field (config) and the script field (script) are null, and the type field is automatically generated as a plugin type (plugin). Dependent components and plugins (dependent) are generated from the dependent field of the orchestration object, and the dependencies are the two components user-manager and role-manager. Since these two components respectively depend on component x and component y, the Web Service-api plugin also needs to depend on components x and y. The API definition field (api) in the definition file is generated from the orchestration object.

Step 5: publishing a plugin. The plugin definition file generated in step 4 and the orchestration output file are packaged and published to the assembly tool to become a plugin.

In a subsequent assembly process, components A and B and this plugin can be used to provide an interface compatibility function from a Web Service client to a rest server, and the entire process does not require modification of codes of components A and B.

Summary: this implementation example demonstrates the use of assembly, orchestration and plugin publishing to implement an extended function of interface protocol conversion without modifying original component codes.

In another exemplary implementation, when assembling a performance assessment system component of a certain company, a user needs to provide different error code configurations according to different scenarios. The error codes are packaged together with the code and are not easy to modify. By using the method of the present disclosure, multiple error code configurations are orchestrated in the assembly process to meet the requirements.

The performance assessment system mainly depends on two components, namely component A and component B.

Step 1: a user selects components and generates definition files.

Since configuration orchestration does not need to use a definition file of a component as an input, configuration orchestration does not need to select components, and configuration-type plugin orchestration does not need step 1.

Step 2: parsing component definitions to generate orchestration objects.

Configuration orchestration is not based on a definition file of a component, but an orchestration object including default values is directly generated by the orchestrator, wherein configuration-type plugin orchestration does not need step 2.

Step 3: a user orchestrates components to generate an orchestration output.

A user directly edits a business configuration in the orchestrator, and writes the business configuration data into a configuration file with a file name of business-scene-a.yaml. The data format of the configuration only needs to satisfy being key-value pairs, and the orchestrator has no additional requirements on the format of the configuration. After the configuration generates a plugin, it is only required that the component using the configuration can recognize it.

Step 4: generating a definition file.

The plugin publishing process constructs a definition file according to the orchestration object output in step 3.

Basic information of the definition file is filled in by the user during orchestration, including a plugin name, a description and a version, the API field (api) and the script field (script) are null, and the type field is automatically generated as a plugin type (plugin). Dependent components and plugins (dependent) are generated from the dependent field of the orchestration object, and the dependency is filled in by the user during orchestration, and the dependent component is user-score-manager. The configuration field (config) in the definition file is generated from the config field of the orchestration object.

Step 5: publishing a plugin.

The plugin definition file generated in step 4 and the orchestration output file are packaged and published to the assembly tool to become a plugin. The plugin provides a configuration for scenario A (sceneA). Similarly, configurations for other scenarios can be orchestrated based on component A and component B to generate plugins. In a subsequent assembly process, by selecting component A and component B and combining them with different configuration plugins, the function of dynamically selecting configurations in the assembly process is implemented for the performance assessment system, without intrusion into existing component codes.

Summary: this implementation example demonstrates the use of assembly, orchestration and plugin publishing to implement a configuration-as-plugin function, providing an extensibility capability of dynamically switching configurations for existing components without modifying original component codes.

From the description of the above implementations, those skilled in the art can clearly understand that the method according to the above embodiments can be implemented by means of software plus a necessary general hardware platform, and of course also by hardware, but in many cases the former is a better implementation. Based on such an understanding, the technical solution of the present disclosure essentially, or the part contributing to the prior art, can be embodied in the form of a software product. The computer software product is stored in a storage medium (such as ROM/RAM, a magnetic disk, or an optical disk), and includes several instructions for enabling a terminal device (which may be a mobile phone, a computer, a server, or a network device, etc.) to execute the method described in the various embodiments of the present disclosure.

In the present embodiment, an apparatus for implementing extensibility of an assembly process is further provided. The apparatus is configured to implement the above embodiments and preferred implementations, and those already described will not be repeated. The term "module" as used below can be a combination of software and/or hardware that implements a predetermined function. Although the apparatus described in the following embodiments is preferably implemented in software, implementations in hardware, or a combination of software and hardware, are also possible and contemplated.

FIG. 15 is a schematic structural diagram of an apparatus for implementing extensibility of an assembly process according to an embodiment of the present disclosure. As shown in FIG. 15, the apparatus includes:
an assembly module 151 configured to select a reusable functional unit and obtain a first definition file set based on the reusable functional unit;
a plugin orchestration module 152 configured to parse the first definition file set to obtain a first orchestration object; and perform an orchestration process on the first orchestration object to obtain a second orchestration object;
a plugin generation module 153 configured to obtain a second definition file set based on the second orchestration object; and configured to obtain a target plugin based on the second definition file set, so that the target plugin provides an extensibility capability for a component.

The difference between the first orchestration object and the second orchestration object lies in different values of fields.

Further, the reusable functional unit includes at least one of the following: a component or a plugin.

Further, the apparatus is further configured to, before selecting the reusable functional unit and obtaining the first definition file set based on the reusable functional unit, further include:
taking the target plugin as a plugin of the reusable functional unit.

Further, the apparatus is further configured to, after obtaining the target plugin based on the second definition file set so that the target plugin provides the extensibility capability for the component, further include:
obtaining a package bundle or a version bundle based on the target plugin and the component of the reusable functional unit.

Further, the apparatus is further configured such that the first orchestration object or the second orchestration object includes: an API object, a configuration object and a script object; wherein,
for the first orchestration object: the API object includes API definition information obtained by parsing the first definition file set, and the configuration object and the script object are both null values;
for the second orchestration object: the API object includes API definition information generated by orchestration, the configuration object includes configuration file information set by orchestration, and the script object includes a file address, an execution engine and execution parameters of a script set by orchestration.

Further, the apparatus is further configured to: obtain an API plugin based on the API object; and perform an orchestration process again based on the API plugin to obtain a new API plugin.

Further, the apparatus is further configured such that parsing the first definition file set to obtain the first orchestration object includes:
performing, based on the first definition file set, a dependency analysis on the reusable functional unit to select a dependent component or plugin.

Further, the apparatus is further configured such that parsing the first definition file set to obtain the first orchestration object includes:
parsing an API field, a configuration field and a script field of the first definition file to obtain a parsing result; and
performing, based on the parsing result, an orchestration operation on the first orchestration object that is an API object, a configuration object or a script object.

Further, the apparatus is further configured such that performing an orchestration process on the first orchestration object to obtain the second orchestration object includes:
in a case where the first orchestration object is the API object, obtaining the second orchestration object in response to a calling operation of an API parameter; wherein the API parameter includes: an API protocol, a request method, a request path, a request parameter and a response parameter;
in a case where the first orchestration object is the configuration object, obtaining the second orchestration object in response to an editing operation on a configuration parameter and a dependent reusable functional unit; and
in a case where the first orchestration object is the script object, obtaining the second orchestration object in response to an editing operation on a script parameter and a script file name.

Further, the apparatus is further configured such that obtaining the target plugin based on the second definition file set includes:
in a case where the first orchestration object is the API object or the configuration object, obtaining the target plugin based on the second definition file set.

Further, the apparatus is further configured such that obtaining the target plugin based on the second definition file set includes:
in a case where the first orchestration object is the script object, obtaining the target plugin based on the second definition file set and the script parameter.

It should be noted that the above modules can be implemented by software or hardware. For the latter, they can be implemented in the following manner, but are not limited thereto: the above modules are all located in the same processor; or, the above modules are respectively located in different processors in any combination.

Embodiments of the present disclosure further provide a computer-readable storage medium having a computer program stored therein, wherein the computer program is configured to, when being executed, perform steps in any one of the above method embodiments.

In an exemplary embodiment, the above computer-readable storage medium may include, but is not limited to: a USB flash drive, a Read-Only Memory (ROM), a Random Access Memory (RAM), a removable hard disk, a magnetic disk, or an optical disk, and other various media that can store a computer program.

Embodiments of the present disclosure further provide an electronic device, including a memory and a processor, the memory having a computer program stored therein, the processor being configured to execute the computer program to perform steps in any one of the above method embodiments.

In an exemplary embodiment, the above electronic device may further include a transmission device and an input/output device, wherein the transmission device is connected to the processor, and the input/output device is connected to the processor.

For specific examples in the present embodiment, reference can be made to the examples described in the above embodiments and exemplary implementations, and the present embodiment will not repeat them here.

It is obvious that those skilled in the art should understand that the modules or steps of the present disclosure described above can be implemented by a general-purpose computing device, they can be concentrated on a single computing device, or distributed on a network composed of multiple computing devices, and they can be implemented by program codes executable by the computing devices, so that they can be stored in a storage device and executed by the computing devices, and in some cases, the steps shown or described can be executed in an order different from that herein, or they can be respectively made into individual integrated circuit modules, or multiple modules or steps among them can be made into a single integrated circuit module for implementation. In this way, the present disclosure is not limited to any specific combination of hardware and software.

The above descriptions are only preferred embodiments of the present disclosure, and are not intended to limit the present disclosure. For those skilled in the art, the present disclosure may have various modifications and changes. Any modifications, equivalent substitutions, improvements, etc. made within the principles of the present disclosure should be included within the protection scope of the present disclosure.

## Claims

1. A method for implementing extensibility of an assembly process, comprising:
selecting a reusable functional unit, and obtaining a first definition file set based on the reusable functional unit;
parsing the first definition file set to obtain a first orchestration object;
performing an orchestration process on the first orchestration object to obtain a second orchestration object;
obtaining a second definition file set based on the second orchestration object; and
obtaining a target plugin based on the second definition file set, so that the target plugin provides an extensibility capability for a component.

2. The method according to claim 1, wherein the reusable functional unit comprises at least one of the following: a component or a plugin.

3. The method according to claim 2, wherein, before selecting the reusable functional unit and obtaining the first definition file set based on the reusable functional unit, the method further comprises:
taking the target plugin as a plugin of the reusable functional unit.

4. The method according to claim 2, wherein, after obtaining the target plugin based on the second definition file set so that the target plugin provides the extensibility capability for the component, the method further comprises:
obtaining a package bundle or a version bundle based on the target plugin and the component of the reusable functional unit.

5. The method according to claim 1, wherein the first orchestration object or the second orchestration object comprises: an API object, a configuration object and a script object; wherein,
for the first orchestration object: the API object comprises API definition information obtained by parsing the first definition file set, and the configuration object and the script object are both null values;
for the second orchestration object: the API object comprises API definition information generated by orchestration, the configuration object comprises configuration file information set by orchestration, and the script object comprises a file address, an execution engine and execution parameters of a script set by orchestration.

6. The method according to claim 5, further comprising:
obtaining an API plugin based on the API object; and
performing an orchestration process again based on the API plugin to obtain a new API plugin.

7. The method according to claim 1, wherein parsing the first definition file set to obtain the first orchestration object comprises:
performing, based on the first definition file set, a dependency analysis on the reusable functional unit to select a dependent component or plugin.

8. The method according to claim 1, wherein parsing the first definition file set to obtain the first orchestration object comprises:
parsing an API field, a configuration field and a script field of the first definition file set to obtain a parsing result; and
performing, based on the parsing result, an orchestration operation on the first orchestration object that is an API object, a configuration object or a script object.

9. The method according to claim 8, wherein performing, based on the parsing result, the orchestration operation on the first orchestration object that is the API object, the configuration object or the script object comprises:
in a case where the first orchestration object is the API object, obtaining the second orchestration object in response to a calling operation of an API parameter; wherein the API parameter comprises: an API protocol, a request method, a request path, a request parameter and a response parameter;
in a case where the first orchestration object is the configuration object, obtaining the second orchestration object in response to an editing operation on a configuration parameter and a dependent reusable functional unit; and
in a case where the first orchestration object is the script object, obtaining the second orchestration object in response to an editing operation on a script parameter and a script file name.

10. The method according to claim 9, wherein obtaining the target plugin based on the second definition file set comprises:
in a case where the first orchestration object is the API object or the configuration object, obtaining the target plugin based on the second definition file set.

11. The method according to claim 9, wherein obtaining the target plugin based on the second definition file set comprises:
in a case where the first orchestration object is the script object, obtaining the target plugin based on the second definition file set and the script parameter.

12. A computer-readable storage medium, having a computer program stored therein, wherein the computer program is configured to, when being executed by a processor, implement steps of the method according to any one of claims 1 to 11.

13. An electronic device, comprising a memory, a processor, and a computer program that is stored in the memory and executable by the processor, wherein the processor is configured to, when executing the computer program, implement steps of the method according to any one of claims 1 to 11.
